# EUROPEAN PATENT APPLICATION

(11) **EP 1 052 562 A2**
(43) Date of publication of application: **15.11.2000**
(21) Application number: 00303397.4
(22) Date of filing: 20.04.2000
(51) Int. Cl.: G05G 1/14

(54) **Pedal support**

(30) Priority: 08.05.1999 GB 9910622
(71) Applicant: DRAFTEX INDUSTRIES LIMITED, Edinburgh EH2 3AP, Scotland (GB)
(72) Inventor: Collignon, Pascal, 51110 Bazancourt (FR); Correia, Jacques, 08300 Rethel (FR); Cospin, Sylvain, 08300 Novy Chevrieres (FR)
(74) Representative: Mackenzie, Andrew Bryan

(57) **Abstract**

A pedal support for use in a vehicle comprising a first part (2) having a pedal support bracket on a first side for mounting a control pedal and defining, on a second side, a main cavity having an opening (18), and a second part (20) divided into a plurality of smaller cavities by ribs (12) and adapted substantially to cover the opening (18). The support is adapted for mounting to an aperture of a vehicle bulkhead (22) which divides the engine compartment of the vehicle from the passenger compartment, with the pedal support bracket being directed towards the passenger compartment of the vehicle. The second part (20) is generally planar and is arranged to form a substantially continous sound-deadening membrane over the aperture.

## Description

This invention relates to a pedal support of the type comprising the combination of a first part having a bracket on a first side for mounting a control pedal and defining on a second side, a main cavity having an opening, and a second part adapted substantially to cover the opening of the main cavity, the combination being adapted for mounting to an aperture of a vehicle bulkhead which divides the engine compartment of a vehicle from the passenger compartment of the vehicle, with the bracket being directed towards the passenger compartment of the vehicle particularly though not exclusively, for mounting a vehicle control pedal such as a brake or clutch pedal.

A pedal of this type is known from GB-A-2362927, which describes a two-part, plastics, moulded pedal support for mounting to a vehicle bulkhead wall.

Accordingly, the invention is characterised by the second part being generally planar and being arranged to form a substantially continous sound-deadening membrane over the aperture.

Embodiments of pedal supports in accordance with the invention will now be described with reference to the drawings in which:-
Figure 1 is an isometric schematic view of a first part of the pedal support viewed from the side of the passenger compartment;
Figure 2 is an isometric schematic view of the first part of the pedal support viewed from the side of the engine compartment;
Figure 3 is a schematic sectional view through an assembly of first and second parts of the pedal support; and
Figure 4 is a schematic sectional view of an extended region of the pedal support.

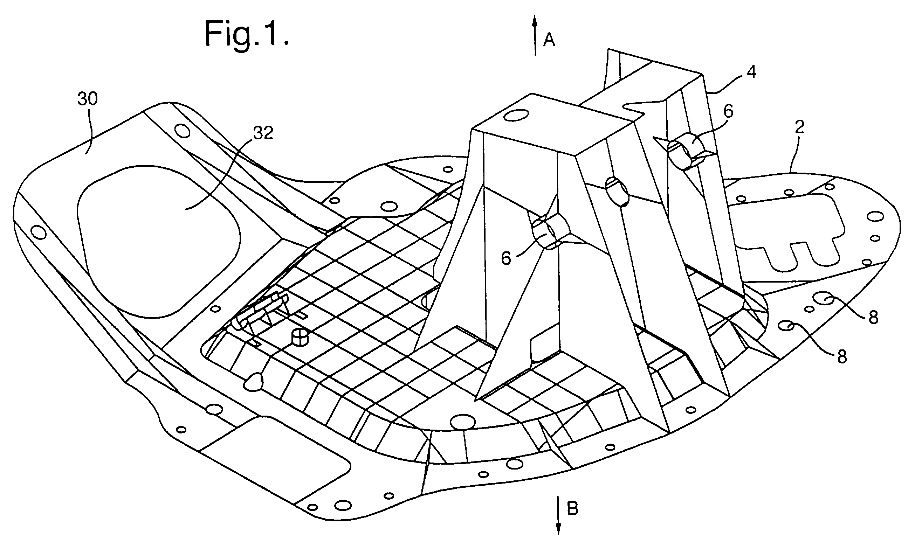

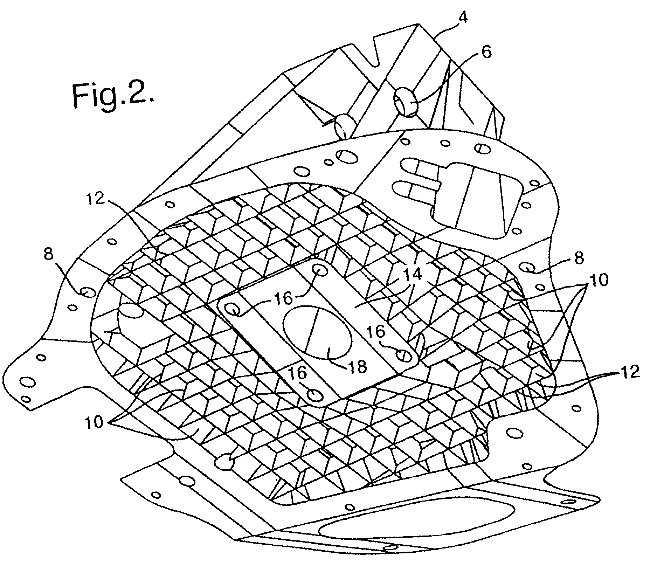

With reference to Figures 1 and 2, a first part of the pedal support 2 is moulded typically from plastic. It may alternatively be a hybrid construction, for example, a combination of metal and plastic. The first part 2 includes integral pedal carriers 4 which have through- holes 6 for carrying one or more pivot pins for the mounting of one or more control pedal of the vehicle. The control pedal may for example be a clutch or brake pedal or perhaps an accelerator pedal.

The first part 2 is adapted for mounting to a vehicle bulkhead with the passenger compartment of the vehicle being in the direction designated by arrow A and the engine compartment being in the direction designated by arrow B.

The first part 2 is fixed to the vehicle bulkhead using one or more peripherally located fixing hole 8.

With particular reference to Figure 2, the first part 2 defines a main cavity which is divided into a plurality of smaller cavities 10 by ribs 12.

The purpose of the ribs 12 is two-fold. Firstly, they provide improved rigidity of the first part 2, and secondly, they provide improved acoustic isolation between the passenger and engine compartments of the vehicle.

Preferably, the cavities 12 are filled with a low density material such as foamed or cellular polyurethane further to enhance their acoustic insulation properties.

Mounting means 14 protrude from the engine compartment side of the first part 2 and include fixing holes 16 for securing to a device such as a brake servo. An aperture 18 generally in the centre of the mounting means 14 allows the through-passage of an actuating rod from a brake pedal (not shown) to a brake servo (not shown) mounted on the mounting means 14.

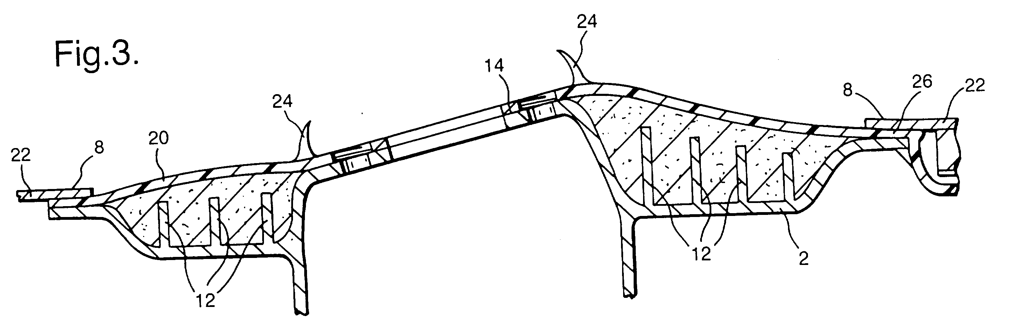

With reference to Figure 3, a second part 20 of the pedal support is formed from a high density material such as rubber or plastic preferably including an additional material to increase its density such as baryte (BaSO₂). Preferably the increased density region is located as a layer which is immediately adjacent the first part 2 (i.e. separated from the bulkhead by a lower density layer). This produces a mass-spring damper arrangement.

The second part is sandwiched between the vehicle bulkhead 22 and the first part 2 when the pedal support is assembled to the vehicle. The high density of the second part 20 aids the acoustic isolation characteristics of the pedal support. The second part 20 has the same general plan as the engine compartment side of the first part and therefore substantially covers the cavities 10.

Lips 24 formed on the engine compartment side of the second part 20 are adapted to seal against an article mounted to the mounting means 14 to form a double-walled arrangement. Prior art arrangements have gaps in these areas which allow sound to leak through.

The second part 20 preferably forms a resilient seal between the first part 2 and the vehicle bulk head 22 in the region 26 at the periphery of the first and second parts 2 and 20. It also conveniently closes off the cavities 10.

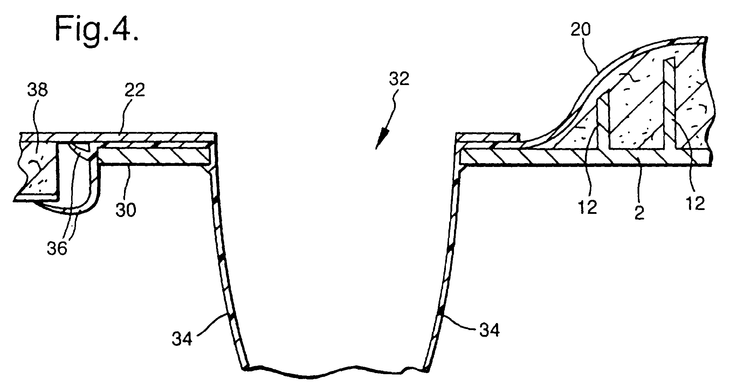

With reference also to Figure 4, an extended region 30 of the first part 2 includes an aperture 32 for the passage of an article such as a steering column. The part 20 includes an extension 34 forming the seal for the steering column. This ensures a physical continuity between the part 20 and the seal 34 which form a single piece.

The seal 34 may omit the relatively denser layer to provide improved flexibility.

Figure 4 also shows lips 36 which seal against the vehicle bulkhead and sound deadening material 38 beyond the edge of the aperture 32.

## Claims

1. A pedal support, comprising the combination of a first part (2) having a bracket (4) on a first side for mounting a control pedal and defining on a second side, a main cavity having an opening (18), and a second part (20) adapted substantially to cover the opening (18) of the main cavity, the combination being adapted for mounting to an aperture of a vehicle bulkhead (22) which divides the engine compartment of a vehicle from the passenger compartment of the vehicle, with the bracket (4) being directed towards the passenger compartment of the vehicle, characterised by the second part (20) being generally planar and being arranged to form a substantially continous sound-deadening membrane over the aperture.

2. A pedal support according to claim 1 or claim 2, wherein the second part (20) is formed from a resilient material.

3. A pedal support according to any preceding claim, wherein the second part has a layered construction including a resilient layer and a relatively dense layer, the resilient layer being closer to the vehicle bulkhead than the denser layer when the pedal support is in use.

4. A pedal support according to any preceding claim, wherein the second part is arranged to form a resilient seal with the vehicle bulkhead generally around the periphery of the first part.

5. A pedal support according to any preceding claim, wherein the main cavity is divided into smaller cavities (10) by ribs (12).

6. A pedal support according to any preceding claim, wherein at least part of the main cavity is filled with a relatively low density sound insulating or absorbing material such as polyurethane.

7. A pedal support according to any preceding claim, wherein the first (2) and second parts (20) are arranged for mounting generally on the passenger compartment side of the vehicle bulkhead (22).

8. A pedal support according to any preceding claim, wherein the first part includes mounting means (14) for the mounting of an article within the engine compartment such as a brake servo.

9. A pedal support according to claim 7, wherein the second part includes a resilient lip (24) arranged to co-operate with the mounting means to form a chamber defined between the second part (20) and an article mounted on the mounting means (14).

10. A pedal support according to any preceding claim, wherein the first part (2) includes an extended region (24) defining an aperture for the passage of a component through the vehicle bulkhead such as steering column and wherein the second part (20) is adapted to form a seal between the extended region and the vehicle bulkhead.
